# EUROPEAN PATENT SPECIFICATION

(11) **EP 0 794 076 B1**
(45) Date of publication and mention of the grant of the patent: **16.08.2000**
(21) Application number: 97102214.0
(22) Date of filing: 12.02.1997
(51) Int. Cl.: B60J 5/04

(54) **Preassembled operating unit for a vehicle door**
Vormontierte Bedienungseinheit für Fahrzeugtür
Unité de commande préassemblée pour une porte de véhicule

(30) Priority: 13.02.1996 IT TO960093
(43) Date of publication of application: 10.09.1997
(73) Proprietor: ATOMA ROLTRA S.p.A., 10090 Cascine Vica - Rivoli (IT)
(72) Inventor: Ottino, Franco Giovanni, 56017 San Giuliano Terme (IT)
(74) Representative: Jorio, Paolo

(56) References cited:
- EP-A- 0 561 440
- EP-A- 0 563 742
- EP-A- 0 712 746
- DE-C- 3 928 685
- US-A- 5 048 234
- US-A- 5 111 620

## Description

The present invention relates to a preassembled operating unit for a vehicle door.

Preassembled operating units are known, which substantially comprise a window regulating device; a lock; and a supporting structure supporting the window regulating device and the lock, and which is fitted to the door. The unit may thus be preassembled and tested off-line to reduce the length of time the vehicle is kept on the assembly line, and the time required for follow-up testing and adjustment.

If the window regulating device is a so-called "pantograph" type, it comprises an actuating assembly; a drive arm hinged to the supporting structure and rotated by the actuating assembly; and a driven arm hinged at an intermediate point to the drive arm, connected at one end to the window, and sliding at the opposite end along a guide fixed to the supporting structure.

The unit is housed inside a lower portion of the door, and is fitted through an opening formed in a panel internally defining the lower portion.

Known units of the type briefly described above (see also EP-A-0563742) present several drawbacks.

In particular, preassembly of the various parts of the unit is a relatively complicated, time-consuming job; and the fairly large size of the unit itself, particularly lengthwise with reference to the on-door position, results in a large opening in the inner door panel, handling problems, and large (high-cost) transport and storage volumes.

It is an object of the present invention to provide a preassembled operating unit for a vehicle door, designed to overcome the aforementioned drawbacks typically associated with known units.

According to the present invention, there is provided a preassembled operating unit for a vehicle door, comprising a pantograph window regulating device, a lock, and supporting means for supporting said window regulating device and said lock, and which are fitted to said door; said window regulating device comprising an actuating assembly; a first arm hinged to said supporting means and activated by said actuating assembly; a second arm having an intermediate portion connected to said first arm, a first end portion having connecting means for connection to a window of said door, and a second end portion; slide means fitted to said second end portion of said second arm; and a guide fixed in relation to said supporting means and cooperating with said slide means; characterized in that said supporting means comprise a single plate forming said guide and integrally comprising a first supporting portion for supporting said actuating assembly of the window regulating device, a second supporting portion to which said first arm is connected, and a third supporting portion for supporting said lock.

A preferred, non-limiting embodiment of the present invention will be described by way of example with reference to the accompanying drawings, in which:
Figure 1 shows a side view, from the inner side of the door, of a preassembled operating unit for a vehicle door in accordance with the present invention;
Figure 2 shows a side view of the Figure 1 unit from the outer side of the door;
Figure 3 shows a top plan view of the Figure 1 unit;
Figure 4 shows a larger-scale section along line IV-IV in Figure 1;
Figure 5 shows a larger-scale plan view of a detail in Figure 3 according to a variation of the present invention.

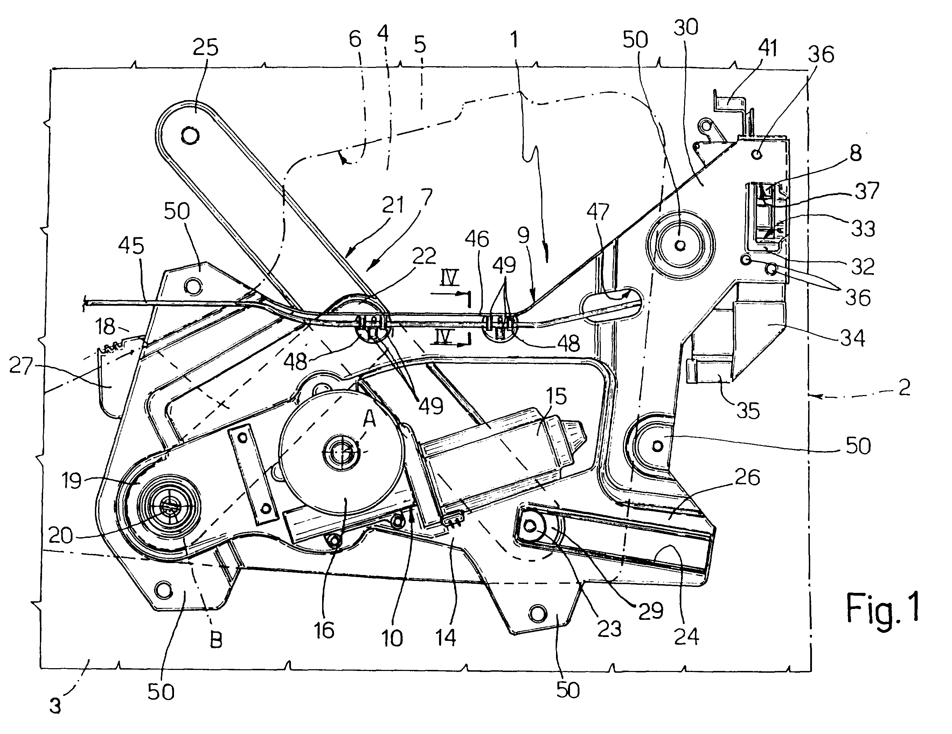

Number 1 in Figures 1 to 3 indicates a preassembled operating unit for a vehicle door 2 (shown partly by the dot-and-dash line in Figure 1).

Door 2 comprises in known manner a lower box portion 3 defined by an outer panel 4 and an inner panel 5 between which is formed a chamber for housing unit 1. For which purpose, inner panel 5 comprises an opening 6 for the insertion of unit 1.

Unit 1 substantially comprises a window regulating device 7 for operating a sliding window (not shown) of door 2; a lock 8 for locking door 2; and a plate 9 for supporting device 7 and lock 8. Plate 9 is fittable to inner panel 5 of door 2, and is conveniently thicker than panels 4 and 5.

Window regulating device 7 is a "pantograph" type, and substantially comprises an actuating assembly 10 fitted to an intermediate portion 14 of plate 9 and in turn comprising an electric motor 15 and a reducer 16 having an output pinion 17 with an axis A crosswise to door 2; a drive arm 18 activated by actuating assembly 10 and secured at one end to a bottom lateral portion 19 of plate 9 by a hinge 20 having an axis B parallel to axis A; and a driven arm 21, an intermediate portion of which is connected in articulated manner to a free end 22 of arm 18.

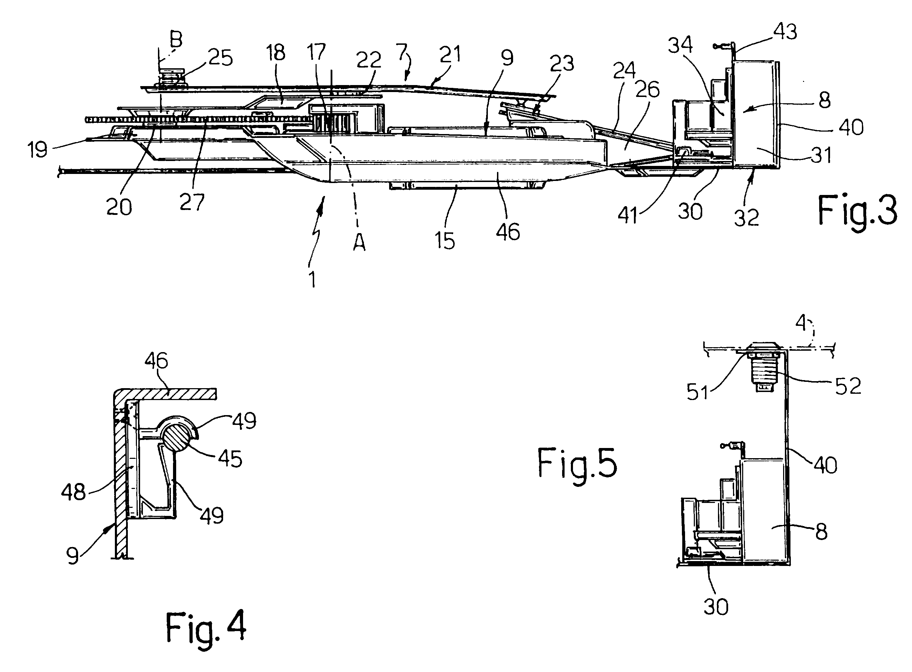

One end 29 of arm 21 is fitted with a slide 23 defined by a roller connected in articulated manner to arm 21, and which slides inside a guide 24 conveniently comprising a slot formed in plate 9; and the opposite end 25 of arm 21 is connectable to a bracket (not shown) fitted in known manner to the bottom edge of the window (not shown). Guide 24 is formed in a bottom lateral portion 26 of plate 9 on the opposite side of actuating assembly 10 to portion 19, and defines for slide 23 a straight path conveniently inclined inwards of the door (Figure 3) towards a peripheral end of the slide.

Arm 18 is integral with a sector gear 27 also pivoting about axis B, and which meshes with output pinion 17 of reducer 16.

Plate 9 comprises an integral elongated appendix 30 for supporting lock 8, and which extends laterally upwards, substantially in a vertical longitudinal plane in relation to the door, from an upper lateral portion of plate 9. Both appendix 30 and guide 24 extend from the same side in relation to intermediate portion 14 and portion 19.

Lock 8 comprises in known manner a casing 31, and a lock mechanism housed at least partly inside casing 31 and interacting with a striker (not shown) fitted to a post (not shown) of door 2. One face 32 of casing 31 comprises an opening 33 for insertion of the striker; and lock 8 is conveniently associated with a door-lock actuator 34 having an electric connector 35.

Casing 31 of lock 8 is fitted at face 32 to appendix 30 by means of a number of screws 36 (Figure 1); and appendix 30 comprises an opening 37 for passage of the striker and facing opening 33 of casing 31.

Appendix 30 comprises an end wall 40 (Figure 3) bent 90° in relation to the plane of the appendix and about lock 8 to protect the lock against impact.

Lock 8 comprises in known manner a lever 41 for controlling release from outside the vehicle, and which is connected to the outside door handle (not shown); a lever 42 for controlling the safety lock from inside the vehicle, and which is connected to a knob (not shown) inside the door; a lever 43 for controlling the safety lock from outside the vehicle, and which is connected to the key assembly (not shown) of the door; and a lever 44 for controlling release from inside the vehicle.

Lever 44 is connected to the inside handle (not shown) of door 2 by a tie 45 conveniently comprising a relatively rigid, appropriately shaped metal wire, and which extends substantially along the top edge 46 of plate 9, on the opposite side of plate 9 to lock 8, and through an opening 47 formed in plate 9 at the base of appendix 30 on the lock 8 side. Tie 45 is secured to plate 9 by a pair of supporting brackets 48 fitted to plate 9 close to edge 46, and comprising flexible elements 49 which click on to and permit axial slide of tie 45.

Top edge 46 is bent laterally and substantially horizontally by 90° (Figure 4) to form an upper guard for tie 45 and prevent access to the tie by break-in means, e.g. a tool inserted downwards between the window and relative seal.

Plate 9 comprises a number of peripheral supporting portions 50, which cooperate with inner panel 5 of door 2, about opening 6, and are fitted rigidly to panel 5 by respective screws (not shown).

Unit 1 conveniently also comprises the electric cables (not shown) of electric motor 15 and lock 8; which cables are preferably formed into a bundle having a multiple electric connector forming the electric interface between the unit and the electric system of the vehicle.

Unit 1 operates in known manner and will therefore only be described briefly.

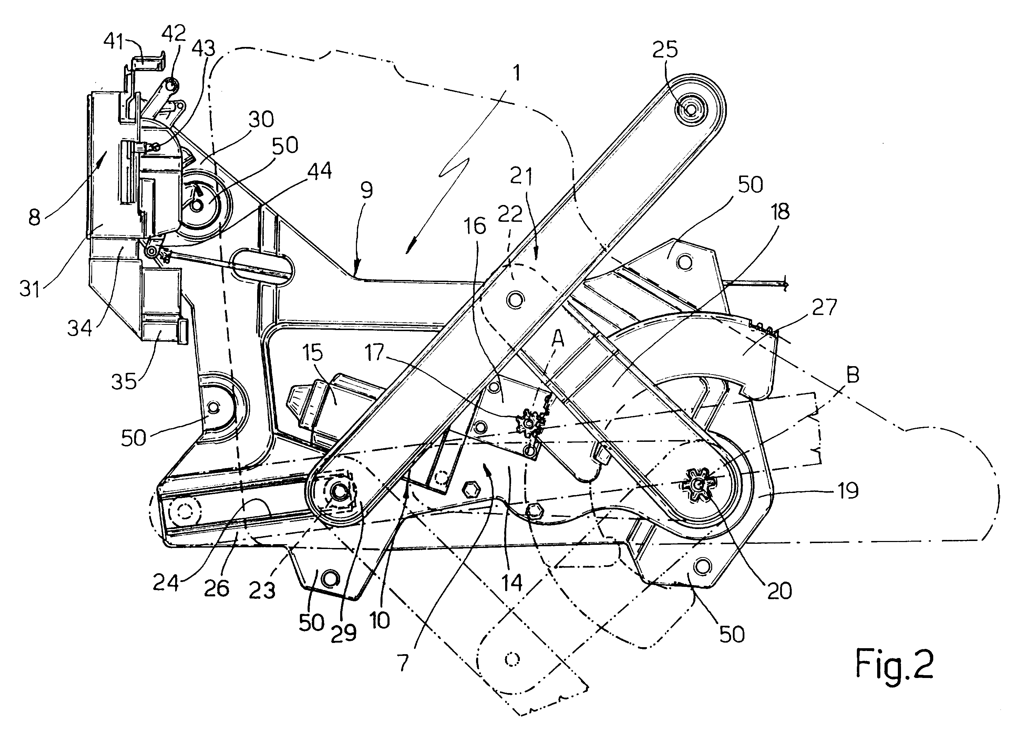

Via reducer 16, electric motor 15 rotates sector gear 27, and hence arm 18 integral with it, about axis B and between an upper limit position (shown by the continuous line in Figures 1 and 2) and a lower limit position (shown by the double-dot-and-dash line). As a result, arm 21 moves between the raised and lowered positions corresponding to the fully raised and lowered positions of the window and in which slide 23 is located at the end of guide 24 closest to axis B, and through an intermediate position (shown by the dot-and-dash line) substantially aligned with guide 24 and in which slide 23 is located at the end of guide 24 furthest away from axis B.

Figure 5 shows a variation of the present invention, wherein plate 9 comprises a further portion 51 projecting from end wall 40 of appendix 30 and bent 90° in relation to end wall 40 and in a plane substantially parallel to that of appendix 30. Portion 51 comprises a seat for a key assembly 52 associated with and connected prismatically to lock 8.

The advantages of unit 1 according to the teachings of the present invention will be clear from the foregoing description.

In particular, all the component parts of unit 1 are fitted to a common supporting element (plate 9) also defining guide 24 of arm 21, and which may be fitted quickly and easily to door 2, thus simplifying both preassembly and on-door assembly of unit 1.

Integrating guide 24 in plate 9 and locating the guide on the lock 8 side of actuating assembly 10 provide for reducing the size, particularly horizontally, of unit 1, and therefore also the size of opening 6 formed in inner panel 5 of door 2 to insert the unit.

Finally, lock 8 is protected by end wall 40, which, being formed integrally with plate 9, is thicker than the sheet metal of door panels 4 and 5, and therefore provides for better protecting and maintaining the efficiency of lock 8, and so enabling the door to be opened even in the event of relatively violent impact.

Clearly, changes may be made to unit 1 as described and illustrated herein without, however, departing from the scope of the present invention.

## Claims

1. A preassembled operating unit (1) for a vehicle door (2), comprising a pantograph window regulating device (7), a lock (8), and supporting means (9) for supporting said window regulating device (7) and said lock (8), and which are fitted to said door (2); said window regulating device (7) comprising an actuating assembly (10); a first arm (18) hinged to said supporting means (9) and activated by said actuating assembly (10); a second arm (21) having an intermediate portion connected to said first arm (18), a first end portion (25) having connecting means for connection to a window of said door (2), and a second end portion (29); slide means (23) fitted to said second end portion (29) of said second arm (21); and a guide (24) fixed in relation to said supporting means (9) and cooperating with said slide means (23); characterized in that said supporting means comprise a single plate (9) forming said guide (24) and integrally comprising a first supporting portion (14) for supporting said actuating assembly (10) of the window regulating device (7), a second supporting portion (19) to which said first arm (18) is connected, and a third supporting portion (30) for supporting said lock (8).

2. A unit as claimed in Claim 1, characterized in that said guide (24) is defined by a slot in said plate (9).

3. A unit as claimed in Claim 1 or 2, characterized in that said guide (24) and said third supporting portion (30) for supporting said lock (8) extend on the same side in relation to said first (14) and second (19) supporting portions.

4. A unit as claimed in any one of the foregoing Claims, characterized in that said third supporting portion (30) comprises an end wall (40) bent 90° about said lock (8).

## Patentansprüche

1. Vormontierte Funktionseinheit (1) für eine Fahrzeugtüre (2), mit einer Scheren-Fensterstellvorrichtung (7) (Pantograph), einer Schließvorrichtung (8) und einer Trägereinrichtung (9) zum Tragen der Fensterstellvorrichtung (7) und der Schließvorrichtung (8), die in die Türe (2) eingebaut sind; wobei die Fensterstellvorrichtung (7) umfaßt: eine Betätigungs-Baugruppe (10); einen an der Trägereinrichtung (9) angelenkten und von der Betätigungs-Baugruppe (10) aktivierten ersten Arm (18); einen zweiten Arm (21), der einen mittleren Teil, welcher mit dem ersten Arm (18) verbunden ist, einen ersten Endteil (25), der Verbindungseinrichtungen zum Verbinden mit einem Fenster der Türe (2) hat, und einen zweiten Endteil (29) aufweist; eine Gleiteinrichtung (23), die mit dem zweiten Endteil (29) des zweiten Arms (21) verbunden ist; und eine Führung (24), die in Bezug zur Trägereinrichtung (9) fest angeordnet ist und mit der Gleiteinrichtung (23) zusammenwirkt; dadurch gekennzeichnet, daß die Trägereinrichtung eine einzelne Platte (9) umfaßt, die die Führung (24) bildet und integral einen ersten Trägerteil (14) zum Tragen der Betätigungs-Baugruppe (10) der Fensterstellvorrichtung (7), einen zweiten Trägerteil (19), mit dem der erste Arm (18) verbunden ist, und einen dritten Trägerteil (30) zum Tragen der Schließvorrichtung (8) umfaßt.

2. Einheit nach Anspruch 1, dadurch gekennzeichnet, daß die Führung (24) durch einen Schlitz in der Platte (9) gebildet ist.

3. Einheit nach Anspruch 1 oder 2, dadurch gekennzeichnet, daß die Führung (24) und der dritte Trägerteil (30) zum Tragen der Schließvorrichtung (8) sich hinsichtlich des ersten Trägerteils (14) und des zweiten Trägerteils (19) auf der selben Seite erstrecken.

4. Einheit nach einem der vorhergehenden Ansprüche, dadurch gekennzeichnet, daß der dritte Trägerteil (30) eine Abschlußwand (40) umfaßt, die um die Schließvorrichtung (8) um 90° herumgebogen ist.

## Revendications

1. Unité de commande préassemblée (1) pour une porte de véhicule (2), comprenant un dispositif lève-vitre du type pantographe (7), une serrure (8) et un moyen de support (9) supportant le dispositif lève-vitre (7) et la serrure (8), lesquels sont montés sur la porte (2), le dispositif lève-vitre (7) comprenant un ensemble actionneur (10), un premier bras (18) articulé au moyen de support (9) et actionné par l'ensemble actionneur (10), un deuxième bras (21) ayant une partie intermédiaire jointe au premier bras (18), une première partie d'extrémité (25) ayant un moyen de jonction à une vitre de la porte (2), et une deuxième partie d'extrémité (29), un moyen coulissant (23) monté sur la deuxième partie d'extrémité (29) du deuxième bras (21), et un guide (24) fixe par rapport au moyen de support (9) et coopérant avec le moyen coulissant (23), caractérisé par le fait que le moyen de support comprend une plaque unique (9) formant le guide (24) et comprenant, solidaires, une première partie support (14) supportant l'ensemble actionneur (10) du dispositif lève-vitre (7), une deuxième partie support (19) à laquelle est joint le premier bras (18), et une troisième partie support (30) supportant la serrure (8).

2. Unité selon la revendication 1, caractérisée par le fait que le guide (24) est constitué d'une fente faite dans la plaque (9).

3. Unité selon l'une des revendications 1 et 2, caractérisée par le fait que le guide (24) et la troisième partie support (30) supportant la serrure (8) s'étendent sur le même côté relativement à la première partie support (14) et la deuxième partie support (19).

4. Unité selon l'une des revendications précédentes, caractérisée par le fait que la troisième partie support (30) comprend une paroi d'extrémité (40) rabattue de 90° autour de la serrure (8).
